# EUROPEAN PATENT APPLICATION

(11) **EP 4 831 794 A1**
(43) Date of publication of application: **28.10.2026**
(21) Application number: 26173226.7
(22) Date of filing: 20.04.2026
(51) Int. Cl.: G06F 8/61, G06F 3/12, H04N 1/00

(54) **IMAGE FORMING APPARATUS AND APPLICATION INSTALLATION CONTROL METHOD**

(30) Priority: 25.04.2025 JP 2025073705
(71) Applicant: Sharp Kabushiki Kaisha, Sakai City, Osaka 590-8522 (JP)
(72) Inventor: IMAI, Hidemitsu, Osaka, 590-8522 (JP)
(74) Representative: Müller Hoffmann & Partner

(57) **Abstract**

An image forming apparatus includes one or more controllers. The one or more controllers receive a setting for an operation mode of the image forming apparatus during installation of an application; and control the installation of the application for the image forming apparatus according to the set operation mode.

## Description

### BACKGROUND OF THE INVENTION

### Field of the Invention

The present disclosure relates to an application installation control method and the like.

### Description of the Background Art

For example, Japanese Unexamined Patent Application Publication No. 2006-163896 discloses that, when a software package is installed in a computer, the validity of data included in the package is verified on the basis of certification data, and when the verification succeeds, a program included in the package is installed in the computer.

Furthermore, Japanese Unexamined Patent Application Publication No. 2019-049799 discloses that, when a verification result of a certification is an error, a warning dialog for confirming whether or not to continue processing by ignoring the error is displayed.

An object of the present disclosure is to provide an application installation control method and the like capable of flexibly installing an application.

### SUMMARY OF THE INVENTION

In order to solve the above-described problem, an application installation control method according to the present disclosure includes: setting an operation mode of an image forming apparatus during installation of an application; and controlling the installation of the application for the image forming apparatus in accordance with the set operation mode.

Furthermore, an image forming apparatus according to the present disclosure includes: a setter that receives setting of an operation mode of the image forming apparatus during installation of an application; and one or more controllers that control the installation of the application for the image forming apparatus in accordance with the set operation mode.

According to the present disclosure, an application installation control method capable of flexibly installing an application can be provided.

### BRIEF DESCRIPTION OF THE DRAWINGS

FIG. 1 is an external perspective view illustrating an overall configuration of an image forming apparatus according to a first embodiment.
FIG. 2 is a diagram illustrating a functional configuration of the image forming apparatus according to the first embodiment.
FIG. 3 is a diagram illustrating an example of a memory map of a storage according to the first embodiment.
FIG. 4 is a flowchart illustrating a processing flow according to the first embodiment.
FIG. 5 is a diagram illustrating an operation example according to the first embodiment.
FIG. 6 is a diagram illustrating the operation example according to the first embodiment.
FIG. 7 is a flowchart illustrating a processing flow according to a second embodiment.
FIG. 8 is a flowchart illustrating a processing flow according to the second embodiment.
FIG. 9 is a diagram illustrating an operation example according to the second embodiment.

### DESCRIPTION OF THE PREFERRED EMBODIMENTS

Hereinafter, embodiments of the present disclosure will be described with reference to the drawings. The following embodiments are examples for describing the present disclosure, and the technical content of the description recited in the claims is not limited to the following description.

In general, when an embedded application is installed in an image forming apparatus such as a multifunction peripheral, the authenticity of the application is determined by performing verification of a signature attached to a package file to be installed. Here, the authenticity according to the present disclosure is intended to mean a characteristic in that an application (package file) to be installed is not falsified or damaged and the application is genuine.

Here, as a result of the verification of the signature, when the signature is inappropriate or the signature is not signed, the image forming apparatus restricts (rejects) the installation of the application. Therefore, in the image forming apparatus having such a configuration, since installation is restricted even for an application (package file) to which a signature is not attached because the date and time of creation is simply old, there has been a problem in that an application which can be used in a model in which signature verification is not performed cannot be used.

In the present disclosure, an application installation control method capable of flexibly installing an application is realized in the following embodiments by setting an operation mode of an image forming apparatus during installation of an application and controlling the installation of the application for the image forming apparatus in accordance with the set operation mode.

### 1. First Embodiment

### 1.1 Functional Configuration

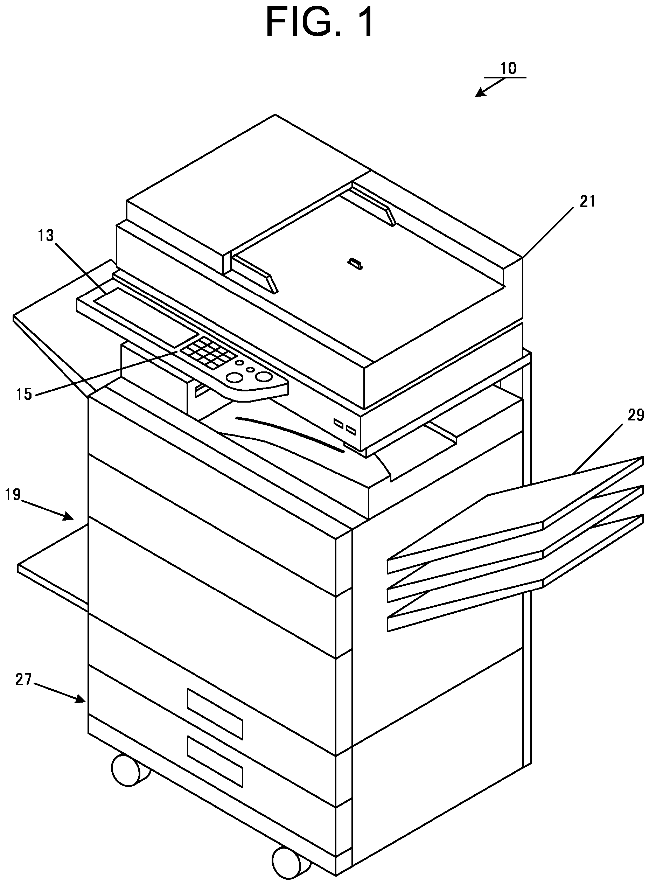

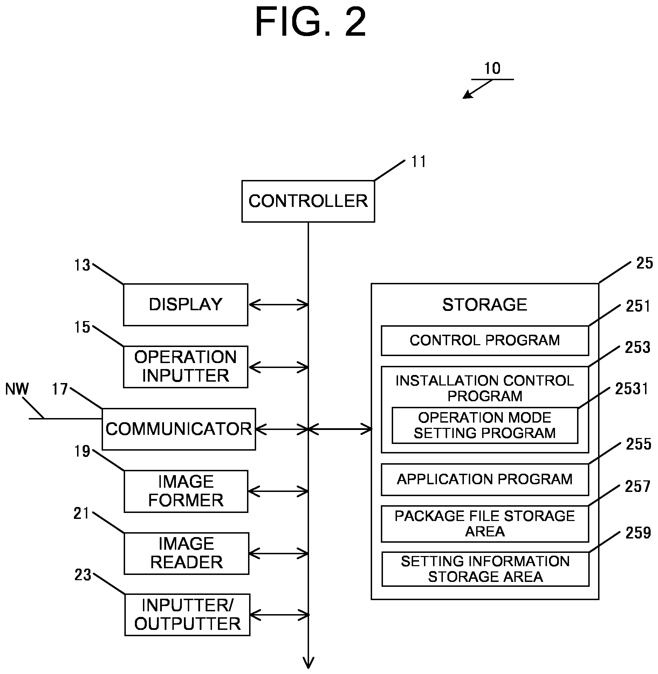

FIG. 1 is an external perspective view illustrating an overall configuration of a multifunction peripheral as an image forming apparatus 10 according to a first embodiment. FIG. 2 is a functional configuration diagram of the image forming apparatus 10.

The image forming apparatus 10 according to the first embodiment is an example of an image forming apparatus to which an application installation control method according to the present disclosure can be applied and which can realize various types of jobs such as printing, copying, faxing, and image transmission in a single housing. The image forming apparatus 10 according to the first embodiment is not limited to the form of a multifunction peripheral, and may be, for example, an image processing apparatus specialized for a specific function such as printing or faxing.

The image forming apparatus 10 includes a controller 11, a display 13, an operation inputter 15, a communicator 17, an image former 19, an image reader 21, an inputter/outputter 23, and a storage 25.

The controller 11 entirely controls the image forming apparatus 10. The controller 11 can be configured by one or more arithmetic devices (a central processing unit (CPU), a digital signal processor (DSP), or the like). The controller 11 reads and executes various programs stored in the storage 25 to realize various functions of the image forming apparatus 10. The controller 11 may be configured as a system on a chip (SoC) having a plurality of functions among functions described below. The controller 11 may be configured by one or more control circuits.

The display 13 is a display device that displays various types of information to a user or the like. The display 13 can be configured by a display device such as a liquid crystal display (LCD), an organic electro-luminescence (EL) display, a micro-LED display, or a mini-LED display.

The operation inputter 15 receives input of an operation and input of information from the user or the like. The operation inputter 15 can be configured by various input devices such as operation keys such as hard keys and software keys, and buttons. The operation inputter 15 can also be configured as a touch panel display that allows input via the display 13. In this case, as an input method to the touch panel display, for example, a resistive method, an infrared method, an electromagnetic induction method, a capacitive method, or the like can be adopted.

The communicator 17 includes a wired/wireless network communication interface for communicating with another terminal device such as a PC via a network NW such as a local area network (LAN), a wide area network (WAN), the Internet, a telephone line, or a facsimile line. The communicator 17 may also include an interface related to a (short-range) wireless communication technology such as Bluetooth (registered trademark), Wi-Fi (registered trademark), ZigBee (registered trademark), infrared data association (IrDA), or wireless universal serial bus (USB).

The image former 19 feeds a paper sheet from a sheet feeder 27, forms an image based on print data on the paper sheet, and then discharges the paper sheet to a sheet discharger 29. The image former 19 can be configured by, for example, a laser printer using an electrophotographic method. In this case, the image former 19 forms an image using toners supplied from toner cartridges (not illustrated) corresponding to toner colors (for example, cyan, magenta, yellow, and black).

The image reader 21 scans and reads a document image to be read to generate scan data. The image reader 21 can be configured as a scanner device including an image sensor such as a charge coupled device (CCD) or a contact image sensor (CIS). The configuration of the image reader 21 is not restricted as long as the image reader 21 is configured to generate scan data composed of an analog signal of RGB (R: red, G: green, B: blue) by reading a reflected light image from a document image with an image sensor. The image reader 21 can also be configured as an interface capable of acquiring, for example, an image file whose file format is TIFF, BMP, JPEG, or the like stored in a storage device such as a USB memory, or image data transmitted from another terminal device such as a PC.

The inputter/outputter 23 has a slot shape connectable to a portable recording medium such as a USB memory or a (micro) SD card, or a connector shape connectable to various communication cables such as a USB cable, and can be configured as an input/output port having a circuit configuration or a device configuration capable of bi-directionally communicating with a connection destination directly connected to the inputter/outputter 23.

The storage 25 is one or more storage devices that store various programs and various types of data necessary for operation of the image forming apparatus 10. The storage 25 can be configured by a storage device such as a random access memory (RAM), a solid state drive (SSD), a hard disk drive (HDD), or a read only memory (ROM).

In the first embodiment, the storage 25 stores a control program 251, an installation control program 253, and an application program 255, and allocates therein a package file storage area 257 and a setting information storage area 259.

The control program 251 is a program read by the controller 11 when the controller 11 entirely controls the image forming apparatus 10. The controller 11 that has read the control program 251 controls driving of hardware such as the display 13, the operation inputter 15, the communicator 17, the image former 19, the image reader 21, and the inputter/outputter 23.

The installation control program 253 is a program read by the controller 11 when an application is installed in the image forming apparatus 10. The controller 11 that has read the installation control program 253 performs verification of the application to be installed, deployment to a predetermined location, performance of a configuration and setting (dependency resolution), and post-processing after installation (creation of a shortcut key, or the like). When an installer is implemented in the application (package file) to be installed, the installer may execute the function of the installation control program 253.

Moreover, the controller 11 that has read the installation control program 253 can acquire an application (package file) distributed from an application distribution server (not illustrated) via the communicator 17. Furthermore, the controller 11 can acquire an application (package file) stored in a portable recording medium such as a USB memory via the inputter/outputter 23.

The installation control program 253 may include an operation mode setting program 2531. The controller 11 that has read the operation mode setting program 2531 functions as a setter that receives setting of an operation mode of the image forming apparatus 10 during installation of an application. In the first embodiment, examples of the operation mode of the image forming apparatus 10 during installation of an application include an operation mode in which the installation of the application is restricted when verification of authenticity of the application fails, an operation mode in which a user is asked whether or not to execute the installation of the application when the verification fails, and an operation mode in which the application is installed without performing the verification. The controller 11 can receive selection of an operation mode of the image forming apparatus 10 by the user via a selection screen to be described below. The controller 11 controls the installation of the application for the image forming apparatus 10 in accordance with the operation mode selected by the user.

Here, the verification of the authenticity of an application according to the present disclosure is intended to determine whether or not to permit installation of the application on the basis of processing of detecting falsification or damage of the application. In the present disclosure, according to the verification of the authenticity of the application, when the installation of the application is permitted, it is expressed that the verification of the authenticity of the application has succeeded, and when the installation of the application is not permitted, it is expressed that the verification of the authenticity of the application has failed.

For the verification of the authenticity of the application, for example, a digital signature method using a public key can be adopted. In the digital signature method, a developer or a vendor of an application calculates a hash value of the entire application and signs the hash value using a private key. The signature of the application is written in the package file at the time of factory shipment of the image forming apparatus 10 of the application or at the time of distribution of the application.

When the authenticity of the application is verified, the hash value calculated from the entire application is compared with the hash value obtained by decrypting the signature using the public key. When the calculated hash value of the entire application matches the hash value obtained by decrypting the signature, it is determined that the verification of the authenticity of the application has succeeded. On the other hand, when the calculated hash value of the entire application does not match the hash value obtained by decrypting the signature, it is determined that the verification of the authenticity of the application has failed.

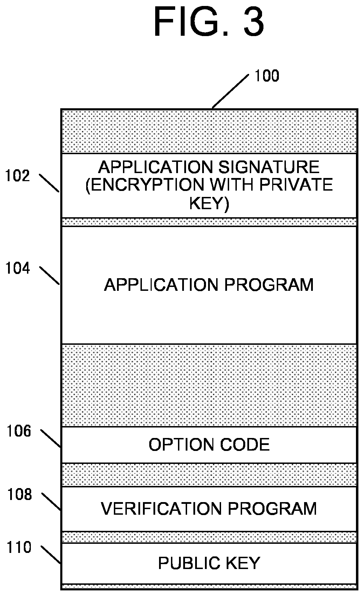

An example of a memory map when the package file of the application to be installed is deployed in the storage 25 (storage device) will be described with reference to FIG. 3. As illustrated in FIG. 3, memory addresses of an application signature area 102, an application program area 104, an option code area 106, a verification program area 108, and a public key area 110 are assigned to a memory map 100. The application signature area 102 is an area for storing a digital signature obtained by encrypting, with a private key, a hash value obtained by compressing the entire application program area 104 with a hash function. The application program area 104 is an area for storing a main body of an application program to be installed. The application program stored in the application program area 104 is used for the verification of the authenticity of the application. The option code area 106 is an area for storing identification information (for example, a flag value) indicating whether or not the application is an application incorporated in advance in the image forming apparatus 10, in addition to setting information necessary for installation of the application, such as designation of a deployment location of the application program, a configuration and setting in the image forming apparatus 10, and post-processing after installation. For example, the controller 11 that has read the installation control program 253 can determine whether or not the application program is an application incorporated in advance in the image forming apparatus 10 by confirming the flag value stored in the option code area 106. The verification program area 108 is an area for storing a verification program for performing the verification of the authenticity of the application. The verification program area 108 can be omitted when the installation control program 253 implements its function. The public key area 110 is an area for storing a public key for decrypting a hash value encrypted with a private key. The controller 11 (that has read the installation control program 253) accesses each area assigned to the memory address of the memory map 100 to execute processing necessary for installing the application.

The configuration of the memory map 100 illustrated in FIG. 3 is merely an example, an installer that automatically performs installation work may be implemented in the package file of the application program, and the configuration of the package file can be changed in setting as appropriate in accordance with the installation form for the image forming apparatus 10.

Returning to FIG. 2 again, the application program 255 is a program that can operate as an application for realizing a predetermined function by being read by the controller 11. An application (package file) installed for the image forming apparatus 10 is deployed as the application program 255. The application program 255 according to the present disclosure is not particularly limited, and examples thereof include application programs for web pages/web services, printers (printing from PCs, AirPrint (registered trademark), Universal Print), facsimile/image transmission (E-mail, FTP, shared folders), and the like.

The package file storage area 257 is a storage area for storing an application incorporated in advance in the image forming apparatus 10 as a package file including a configuration necessary for installation.

The setting information storage area 259 is a storage area for storing various types of setting information such as a setting value of an operation mode of the image forming apparatus 10 during installation of an application selected by a user, in addition to apparatus setting necessary for operation of the image forming apparatus 10, network setting, setting for normal operation of an application, file setting, job setting related to execution of a job, and the like.

### 1.2 Processing Flow

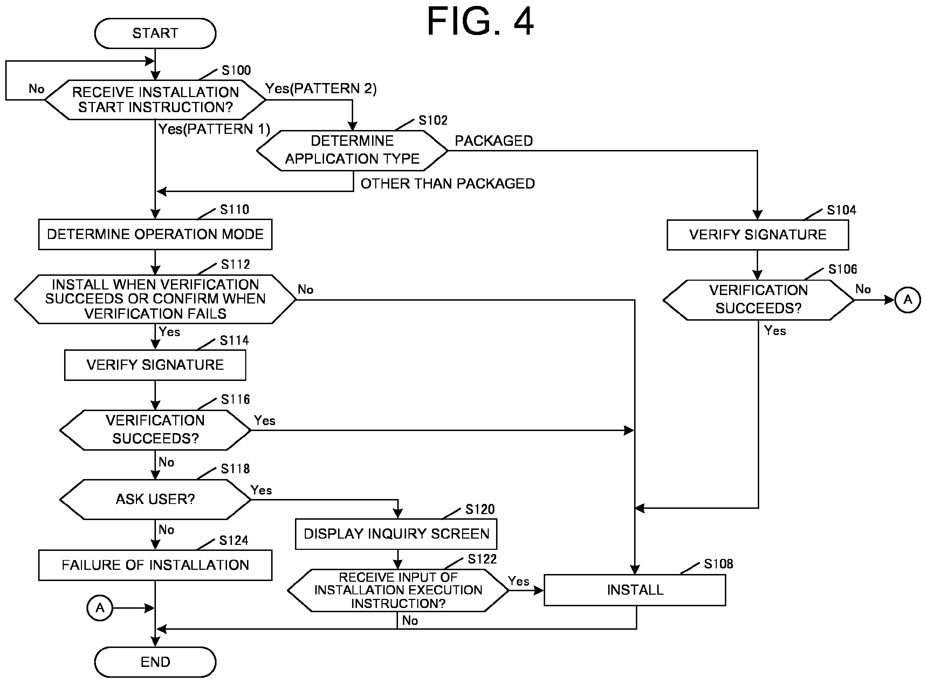

Next, a processing flow according to the first embodiment will be described with reference to FIG. 4. The processing described in FIG. 4 is described as processing executed by the controller 11 reading the control program 251, the installation control program 253 (the operation mode setting program 2531), and the like.

The controller 11 determines whether or not an installation start instruction of an application has been received by the user (step S100). The installation start instruction can be performed, for example, through selection of an execution file (installer) included in the package file of the application, a web browser (cloud service), a command line, a script, or the like.

When it is determined that the installation start instruction has been received, the controller 11 determines an operation mode of the image forming apparatus 10 set by the user (step S100; Yes (pattern 1) to step S110). On the other hand, when it is determined that the installation start instruction has not been received, the controller 11 waits until the installation start instruction is received (step S100; No).

As a result of the determination of the operation mode of the image forming apparatus 10, when it is determined that the operation mode of the image forming apparatus 10 is neither the operation mode in which the installation of the application is restricted when the verification of the authenticity of the application fails nor the operation mode in which the user is asked whether or not to execute the installation of the application when the verification fails, the controller 11 determines that the operation mode of the image forming apparatus 10 is the operation mode in which the application is installed without performing the verification, and executes the installation of the application (step S112; No to step S108).

On the other hand, when it is determined that the operation mode of the image forming apparatus 10 is one of the operation mode in which the installation of the application is restricted when the verification of the authenticity of the application fails and the operation mode in which the user is asked whether or not to execute the installation of the application when the verification fails, the controller 11 verifies the authenticity of the application (step S112; Yes to step S114).

Then, the controller 11 determines whether or not the verification of the authenticity of the application has succeeded (step S116). When the verification of the authenticity of the application has succeeded, the controller 11 installs the application and terminates the processing (step S116; Yes to step S108). On the other hand, when the verification of the authenticity of the application has failed, the controller 11 determines whether or not it is necessary to ask the user as an operation when the verification has failed (step S116; No to S118). When it is determined that it is necessary to ask the user, the controller 11 displays an inquiry screen on the display 13 (step S118; Yes to step S120).

Next, the controller 11 determines whether or not an installation instruction of the application by the user has been received via the inquiry screen (step S122). When it is determined that the installation instruction of the application by the user has been received, the controller 11 executes installation of the application (step S122; Yes to step S108).

On the other hand, when it is determined that the installation instruction of the application by the user has not been received, the controller 11 terminates the processing (step S122; No).

In addition, in step S118, when it is determined that it is not necessary to ask the user, the controller 11 terminates the processing as failure of installation (step S118; No to step S124).

Incidentally, when it is determined that the installation start instruction has been received, the controller 11 may determine whether or not the type of the application to be installed is an application incorporated (packaged) in advance in the image forming apparatus 10 (step S100; Yes (pattern 2) to step S102).

When it is determined that the application to be installed is an application incorporated in advance in the image forming apparatus 10, the controller 11 verifies the authenticity of the application (step S102; packaged to step S104).

Then, when the verification of the authenticity of the application has succeeded, the controller 11 installs the application and terminates the processing (step S106; Yes to step S108). On the other hand, when the verification of the authenticity of the application has failed, the controller 11 terminates the processing (step S106; No). In general, the verification of the authenticity of an application (package file) incorporated in advance in the image forming apparatus 10 cannot fail. If such a situation occurs, it is considered that a critical situation has occurred, for example, the package file of the packaged application, which is the internal data of the image forming apparatus 10, has been falsified by someone. Therefore, when the verification of the authenticity of the application incorporated in the image forming apparatus 10 has failed, it is not preferable to execute the installation of the application. Thus, when the verification has failed, the installation of the application is restricted (rejected) regardless of the setting content of the operation mode set by the user.

Incidentally, when it is determined that the application to be installed is not an application incorporated in advance in the image forming apparatus 10, that is, when the application to be installed is acquired as a package file from the outside via the communicator 17 or is acquired from a portable recording medium such as a USB memory via the inputter/outputter 23, the controller 11 determines the operation mode of the image forming apparatus 10 set by the user, and executes the processing after step S112 described above (step S102; other than packaged to step S110 to step S112).

### 1.3 Operation Example

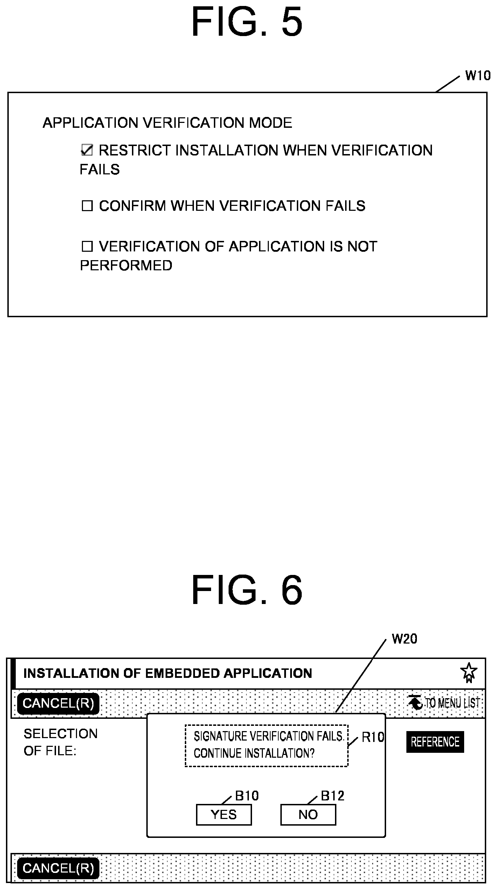

Next, an operation example according to the first embodiment will be described. FIG. 5 is a diagram illustrating an example of a display configuration of a selection screen W10 for receiving a selection instruction of an operation mode of the image forming apparatus 10 during installation of an application.

The selection screen W10 includes a check box for receiving a selection instruction of one of the operation mode in which the installation of the application is restricted when the verification of the authenticity of the application fails (restrict installation when verification fails), the operation mode in which the user is asked whether or not to execute the installation of the application when the verification fails (confirm when verification fails), and the operation mode in which the application is installed without performing the verification (verification of application is not performed).

By checking the check box corresponding to the desired operation mode as the operation mode of the image forming apparatus 10 during installation of the application, the user can set the operation mode. The setting value of the operation mode of the image forming apparatus 10 during installation of the application selected by the user is stored in the setting information storage area 259, and is read out during the determination processing of the operation mode in step S110 of FIG. 4.

FIG. 6 is a diagram illustrating an example of a display configuration of an inquiry screen W20 displayed for the user in step S120 of FIG. 4. The inquiry screen W20 includes a display area R10 for displaying, when the verification of the authenticity of the application fails, the content that asks the user whether or not to execute installation of the application, "Signature verification fails. Continue installation?", a Yes button B10, and a No button B12. The Yes button B10 is a button for receiving input of an instruction of the installation execution (continuation) of the application. The No button B12 is a button for receiving a cancellation instruction of the installation execution (continuation) of the application. The user can input an instruction or a cancellation instruction of the installation execution (continuation) of the application by confirming the display content in the display area R10 and then selecting either the Yes button B10 or the No button B12.

As described above, according to the first embodiment, even an application in which the verification of the authenticity has failed can be installed on the basis of the determination of the user, and thus, for example, even an application which has been used and to which a signature is not attached can be continuously used.

### 2. Second Embodiment

A second embodiment is, for example, a mode in which an installation result of an application (success or failure of verification of authenticity of the application, or the like) is registered as an audit log in order to respond to security strengthening laws such as the Cyber Resilience Act, RED (EU Radio Equipment Directive 2014/53/EU), or the IoT Cybersecurity Improvement Act.

### 2.1 Functional Configuration

The functional configuration of an image forming apparatus according to the second embodiment can be realized by providing an audit log storage area for recording an audit log in the storage 25 in the functional configuration of the image forming apparatus 10 according to the first embodiment.

### 2.2 Processing Flow

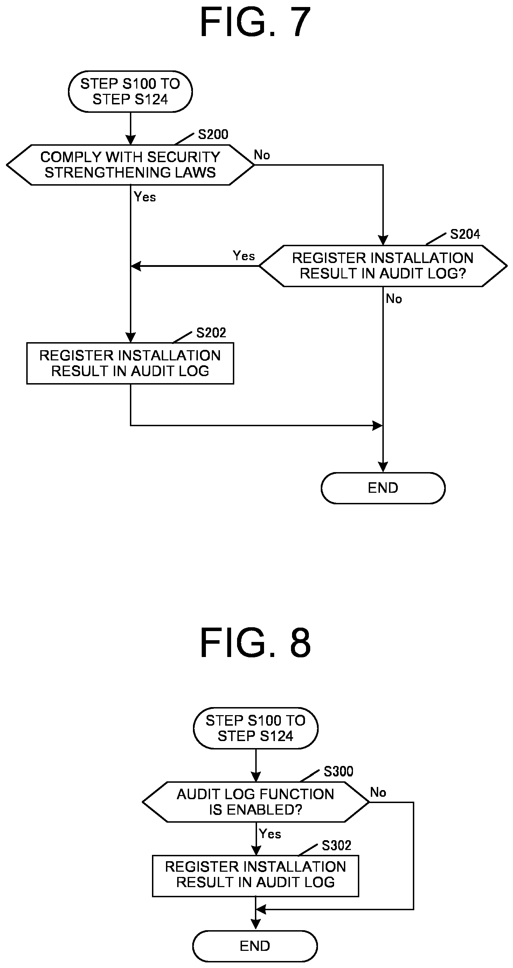

A processing flow according to the second embodiment can be executed continuously to the processing described in the flowchart of FIG. 4 of the first embodiment. As the processing flow according to the second embodiment, a flow (first processing flow) of registering an audit log when the image forming apparatus 10 is set to comply with the security strengthening laws and a flow (second processing flow) of registering an audit log when an audit log registration function is set to be enabled through system setting (not illustrated) or the like will be described. In FIG. 7 illustrating the first processing flow and FIG. 8 illustrating the second processing flow, processing after step S100 to step S124 of FIG. 4 will be described.

### 2.2.1 First Processing Flow

In FIG. 7, when the controller 11 executes the processing of step S100 to step S124 of FIG. 4, the controller 11 determines whether or not the image forming apparatus 10 complies with the security strengthening laws (step S200). When it is determined that the image forming apparatus 10 complies with the security strengthening laws, the controller 11 registers the installation result as an audit log (step S200; Yes to step S202).

On the other hand, when it is determined that the image forming apparatus 10 does not comply with the security strengthening laws, the controller 11 asks the user whether or not to register the installation result in the audit log (step S200; No to step S204). When it is determined that the image forming apparatus 10 does not comply with the security strengthening laws (step S200; No), the processing related to step S204 may be omitted and the processing may be immediately terminated. When an instruction of the registration of the installation result has been received by the user, the controller 11 registers the installation result as an audit log (step S204; Yes to step S202). On the other hand, when the instruction of the registration of the installation result has not been received by the user, the controller 11 terminates the processing (step S204; No). In addition, when it is determined that the image forming apparatus 10 does not comply with the security strengthening laws (step S200; No), the controller 11 determines the type of the application. When the type of the application to be installed is an application incorporated in advance in the image forming apparatus 10, the controller 11 may shift the processing to step S202, and when the type of the application to be installed is not an application incorporated in advance in the image forming apparatus 10, the controller 11 may shift the processing to step S204 (or terminate the processing).

In FIG. 7, a mode in which the processing is branched depending on whether or not the image forming apparatus 10 complies with the security strengthening laws has been described. However, when the destination of the image forming apparatus 10 is a country, an area, or the like under the system of the security strengthening laws, a mode in which the installation result is registered in the audit log as initial setting of the image forming apparatus 10 may be adopted.

### 2.2.2 Second Processing Flow

In FIG. 8, when the controller 11 executes the processing of step S100 to step S124 of FIG. 4, the controller 11 determines whether or not the audit log registration function is set to be enabled as the system setting (step S300).

When it is determined that the audit log registration function is set to be enabled, the controller 11 registers the installation result as an audit log (step S300; Yes to step S302). On the other hand, when it is determined that the audit log registration function is set to be disabled, the controller 11 terminates the processing (step S300; No). In addition, when it is determined that the audit log registration function is set to be disabled (step S300; No), the controller 11 determines the type of the application. When the type of the application to be installed is an application incorporated in advance in the image forming apparatus 10, the controller 11 may shift the processing to step S302, and when the type of the application to be installed is not an application incorporated in advance in the image forming apparatus 10, the controller 11 may terminate the processing.

In the second embodiment, a mode in which the installation result to be registered as the audit log is regardless of whether the installation has succeeded or failed has been described. However, a mode in which only the case where the installation of the application has failed (or succeeded) as the installation result is recorded as the audit log may be adopted. Furthermore, when the verification of the authenticity of the application has failed, an inquiry screen may be displayed, and an audit log of "verification error" can be left even in a case where the installation is continued on the basis of an instruction by the user. Incidentally, in the above-described processing flow, each of the first processing flow and the second processing flow has been described as individual processing, but the first processing flow and the second processing flow may be applied in combination.

### 2.3 Operation Example

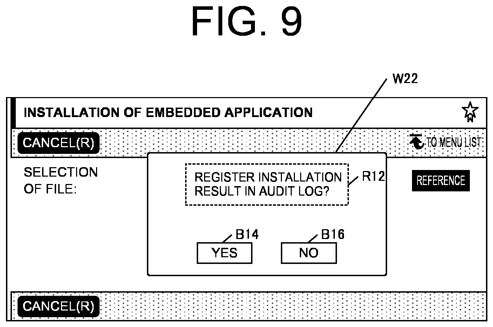

FIG. 9 is a diagram illustrating an example of a display configuration of an inquiry screen W22 displayed for the user in step S204 of FIG. 7. The inquiry screen W22 includes a display area R12 for displaying the content that asks whether or not to register the installation result of the application in the audit log, "Register installation result in audit log?", a Yes button B14, and a No button B16. The Yes button B 14 is a button for receiving input of an instruction of the registration of the installation result in the audit log. The No button B 16 is a button for receiving a cancellation instruction of the registration of the installation result in the audit log. The user can input an instruction or a cancellation instruction of the registration of the installation result in the audit log by confirming the display content in the display area R12 and then selecting either the Yes button B14 or the No button B16.

As described above, according to the second embodiment, in addition to the effects of the first embodiment, it is possible to perform audit log registration control based on the security strengthening laws such as the Cyber Resilience Act, RED, or the IoT Cybersecurity Improvement Act.

The present disclosure is not limited to the above-described embodiments, and various modifications may be made thereto. That is, embodiments obtained by combining technical measures appropriately modified within the scope not departing from the gist of the present disclosure are also included in the technical scope of the present disclosure.

Although the above-described embodiments have been separately described for convenience of description, it is needless to say that the embodiments may be combined and executed within a technically allowable range.

The program that operates in each device in the embodiments is a program that controls a CPU and the like (a program that causes a computer to function) so as to realize the functions of the above-described embodiments. Information handled by each device is temporarily accumulated in a temporary storage device (for example, a RAM) at the time of processing, and is then stored in various storage devices such as a read only memory (ROM) and an HDD, and is read, corrected, and written by the CPU as necessary.

Here, a computer-readable non-transitory recording medium in which a program is recorded in an information processing apparatus may be any of a semiconductor medium (for example, a ROM or a non-volatile memory card), an optical recording medium or magneto optical recording medium (for example, a digital versatile disc (DVD), a magneto optical disc (MO), a mini disc (MD), a compact disc (CD), or a Blu-ray (registered trademark) disc (BD)), a magnetic recording medium (for example, a magnetic tape or a flexible disk). In this case, the program recorded in the recording medium is read by a computer of the information processing apparatus and executed by the computer, so that not only the functions of the above-described embodiments are realized, but also the functions of the present disclosure are realized by processing in cooperation with an operating system, another application program, or the like on the basis of an instruction of the program.

When the program is distributed on the market, the program can be stored in a portable recording medium and distributed, or can be transferred to a server computer connected via a network such as the Internet. In this case, it is needless to say that a storage device of the server computer is also included in the present disclosure.

Each functional block or various features of a device used in the above-described embodiments can also be implemented and executed by an electric circuit, for example, an integrated circuit or a plurality of integrated circuits. An electric circuit designed to realize the functions described herein may include a general purpose processor, a digital signal processor (DSP), an application specific integrated circuit (ASIC), a field programmable gate array (FPGA), or another programmable logic device, a discrete gate or a transistor logic, a discrete hardware component, or any combination thereof. The general purpose processor may be a microprocessor, or a conventional processor, controller, microcontroller, or state machine. The above-described electric circuit may be configured by a digital circuit or an analog circuit. Furthermore, when an integrated circuit technology that replaces the current integrated circuits appears due to the progress of the semiconductor technology, one or more aspects of the present disclosure can use a new integrated circuit according to the technology.

### REFERENCE SIGNS LIST

10 image forming apparatus
11 controller
13 display
15 operation inputter
17 communicator
19 image former
21 image reader
23 inputter/outputter
25 storage
251 control program
253 installation control program
2531 operation mode setting program
255 application program
257 package file storage area
259 setting information storage area

## Claims

1. An image forming apparatus (10) comprising:
one or more controllers (11), wherein
the one or more controllers (11) are configured to:
receive a setting for an operation mode of the image forming apparatus (10) during installation of an application; and
control the installation of the application for the image forming apparatus (10) according to the set operation mode.

2. The image forming apparatus (10) according to claim 1, wherein
the operation mode includes at least one of an operation mode in which the installation of the application is restricted when verification of authenticity of the application fails, an operation mode in which a user is asked whether or not to execute the installation of the application when the verification fails, and an operation mode in which the application is installed without performing the verification.

3. The image forming apparatus (10) according to claim 2, further comprising:
a display (13), wherein,
when the operation mode of the image forming apparatus (10) is the operation mode in which the user is asked whether or not to execute the installation of the application when the verification fails, the one or more controllers (11) display an inquiry screen on the display (13), and execute the installation of the application when an installation execution instruction is received via the inquiry screen.

4. The image forming apparatus (10) according to claim 1, wherein
the one or more controllers (11) control the installation of the application depending on whether or not the application is an application incorporated in advance in the image forming apparatus (10).

5. The image forming apparatus (10) according to claim 4, wherein,
when the application is an application incorporated in advance in the image forming apparatus (10) and the verification fails, the installation of the application is restricted regardless of a setting content of the operation mode.

6. The image forming apparatus (10) according to claim 1, further comprising:
a storage (25) that stores an installation result of the application as an audit log.

7. The image forming apparatus (10) according to claim 6, wherein,
when the image forming apparatus (10) complies with security strengthening laws, the storage (25) stores the audit log.

8. An application installation control method comprising:
receiving a setting for an operation mode of an image forming apparatus (10) during installation of an application; and
controlling the installation of the application for the image forming apparatus (10) according to the set operation mode.
